# EUROPEAN PATENT SPECIFICATION

(11) **EP 0 288 124 B1**
(45) Date of publication and mention of the grant of the patent: **06.07.1994**
(21) Application number: 88200742.0
(22) Date of filing: 19.04.1988
(51) Int. Cl.: C08K 5/00, C08L 73/00

(54) **Stabilized copolymer compositions**
Stabilisierte Copolymerzusammensetzungen
Compositions stabilisées de copolymères

(30) Priority: 22.04.1987 GB 8709488
(43) Date of publication of application: 26.10.1988
(73) Proprietor: SHELL INTERNATIONALE RESEARCH MAATSCHAPPIJ B.V., 2596 HR Den Haag (NL)
(72) Inventor: Klei, Ebel, NL-1031 CM Amsterdam (NL)

(56) References cited:
- EP-A- 0 209 127
- EP-A- 0 255 801
- US-A- 3 929 727
- US-A- 4 024 104
- US-A- 4 438 094

## Description

The present invention relates to compositions comprising certain additives and a copolymer of carbon monoxide and an olefinically unsaturated compound, e.g. ethylene. The relevant copolymers are characterized by having an alternating structure ⁅-A-CO]ₙ, in which A is a unit , derived from the olefinically unsaturated compound. The term "copolymer" includes terpolymers in which some of the units A are derived from another olefinically unsaturated compound. As an example of suitable terpolymers reference is made to a copolymer of ethylene, carbon monoxide and propylene or butylene.

The relevant alternating copolymers and their methods of preparation are known per se, cf. US-A 3694412, EP-A 121965 and EP-A 181014. Whilst such copolymers have attractive physical and mechanical properties such as yield stress, tensile strength, impact strength and flexural modulus, their stability against actinic degradation leaves room for improvement.

Applicants have found that a very large number of commercial UV-stabilizers, that perform well in polyamides, polyolefins, polyacrylates, polystyrenes and various other commodity thermo-plastics and engineering thermoplastics, fail to achieve the desired results in alternating olefin/CO copolymers. It is therefore surprising that a few groups of narrowly defined additives appear to produce the desired UV-stabilizing improvement.

The present invention provides copolymer compositions comprising an alternating copolymer of carbon monoxide, an olefinically unsaturated compound, preferably ethylene, and optionally another olefinically unsaturated compound and from 0.03 to 5.0 %w, based on the total composition, of an an additive selected from
a) compounds of the general formula 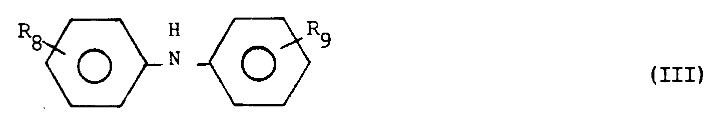 in which
   R₈ and R₉, each indepently, represent a hydrogen atom, an alkyl group with 1 to 12 carbon atoms, a phenyl group or a benzyl group in which the methylene group may carry one or two substituents selected from alkyl groups with 1 to 8 carbon atoms,
b) compounds of the general formula 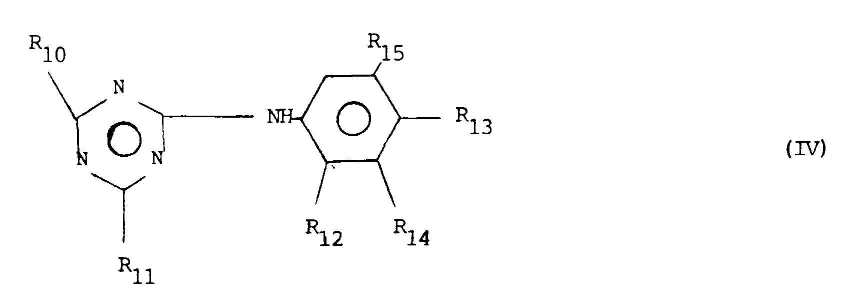 in which
   R₁₀ and R₁₁ are, each independently, alkyl or alkylthio groups with 1 to 14 carbon atoms,
   R₁₂ is a hydrogen atom or a hydroxyl group,
   R₁₃ is a hydroxyl group if R₁₂ is hydrogen or a hydrogen atom or a hydroxyl group if R₁₂ is hydroxyl,
   R₁₄ and R₁₅ are hydrogen atoms or alkyl groups with 1 to 16 carbon atoms, provided at least R₁₄ is alkyl if R₁₂ is hydroxyl and at least R₁₄ or R₁₅ is alkyl if R₁₃ is hydroxyl.

Suitable compounds of group a) are di-(phenyl)amine, di-(4-methylphenyl)amine, di-(6-hexyl phenyl)-amine, di-(4-benzylphenyl)amine, di-(4-alpha,alpha-di-n-propyl-benzylphenyl)amine, di-(4-alpha-ethylbenzylphenyl)amine, di-(4-phenylphenyl)amine, di-(4-propylphenylphenyl)amine, di-(4'-cyclohexylbenzylphenyl)amine, and di-(4-nonylphenyl)amine.

Preferred compounds in this class a) are those wherein R₈ and/or R₉ is alpha,alphadialkylbenzyl. Another preferred group comprises compounds in which R₈ or R₉ is an n-alkyl group with 6 to 10 carbon atoms. The most preferred compound is di-(4-alpha,alphadimethylbenzylphenyl) amine.

Suitable compounds of class b) are for example
6-(2'-hydroxy-3'-propylanilino)-2,4-dimethyl-1,3,5-triazine,
6-(4'-hydroxy-5'-t.-butylanilino)-2,4-dihexylthio-1,3,5-triazine,
6-(2',4'-dihydroxy-3',5'-di-t.butylanilino)-2-hexyl-4-ethylthio-1,3,5-triazine,
6-(2'-hydroxy-3'-t.butyl-5'-methylanilino)-2,4-dicyclohexyl-1,3,5-triazine,
6-(4'-hydroxy-3',5'-diisopropylanilino)-2-cyclohexyl-4-cyclohexylthio-1,3,5-triazine and
6-(4-hydroxy,3,5'-di-t.butylanilino)-2,4-diheptylthio-1,3,5-triazine.

Preferred compounds of class b) are those in which R₁₄, possibly also R₁₅ is an alkyl group causing steric hindrance. In the anilino substituent the preferred position for the hydroxyl group is that of R₁₃ whilst in that case R₁₂ is preferably hydrogen. Preferred substituents R₁₀ and R₁₁ are n-alkylthio groups with 6 to 10 carbon atoms. The most preferred compound is 6-(4'-hydroxy-3',5'-di-t.butylanilino)-2,4-di-n-octylthio-1,3,5-triazine.

This invention is of particular importance for the stabilization of alternating terpolymers of ethylene, propylene and carbon monoxide in which the ratio of C₂H₄ units to C₃H₆ units in the polymer chains is at least 3:1 and at most 15:1. A more preferred group of ethylene/propylene/carbon monoxide terpolymers comprises those having a crystalline melting point selected within the range of from 215 to 240 °C. Another preferred class of copolymers are copolymers of ethylene and carbon monoxide.

The weight average molecular weight of the copolymers to be employed in this invention is preferably at least 2000, more preferably at least 6000.

The improved compositions of this invention can he processed into articles of manufacture such as fibres, sheets, films, laminates, containers, tubes, piping and articles having an intricate shape by conventional processing techniques such as melt-spinning, extrusion, coextrusion, blow-moulding, compression-moulding, injection-moulding and solid phase pressure forming. The invention is of special importance to improving the long-life light stability of the relevant copolymers and terpolymers. The stabilized copolymer composition of this invention may include further additives such as carbon black, mineral fillers, dyes, colourants and plasticizers. Likewise the copolymer composition may be blended with other thermoplastics.

### Example

The following compounds were tested for their stabilizing performance:
c) 4,4'-bis (alpha,alpha-dimethylbenzyl)diphenylamine.
d) 6-(4-hydroxy-3,5-dit.butylanilino)-2,4-bis(n-octylthio)-1,3,5-triazine.
e) ((3,5-bis(1,1-dimethylethyl)-4-hydroxyphenyl)methyl)butyl-bis (1,2,2,6,6-pentamethyl-4-piperidinyl)ester.
f) Poly((2,2,6,6-tetramethyl-1,4-piperidinediyl)oxy(1,4-dioxo-1,-4-butanediyl)oxy-1,2-ethanediyl).
g) Bis (2,2,6,6-tetramethyl-4-piperidinyl) sebacate.
Additives c and d are additives of the invention, additives e, f and g, which are well known and widely used commercial stabilizers, are included for comparison.

1 Mm thick test specimen were prepared by compression moulding at 250 °C of an ethylene propylene carbon monoxide terpolymer having an alternating structure, a crystalline melting point of 218 °C and an intrinsic viscosity of 1.6 dl/g. All stabilizers were used in a concentration of 1.0 %wt. Prior to testing the specimen were equilibrated at 23 °C and 50% rel. humidity, during 72 hours.

The specimen were subjected to weatherometer exposure at the following conditions: Xenon arc, water cooled borosilicate glass sampler, intensity 0.6 W.m⁻² at 340. 10⁻⁹ m, black panel temperature 55 to 60 °C, air temperature 30 °C, humidity 50% relative, dry cycle 102 min, wet cycle 18 min. Tensile strength was determined employing a rate of elongation of 20 mm.min⁻¹.

The results are shown in the Table. Results at best similar too, but mostly inferior to the ones obtained with the comparative additives e and f were found for many other commercial stabilizers for thermoplastics, particularly polyolefins.

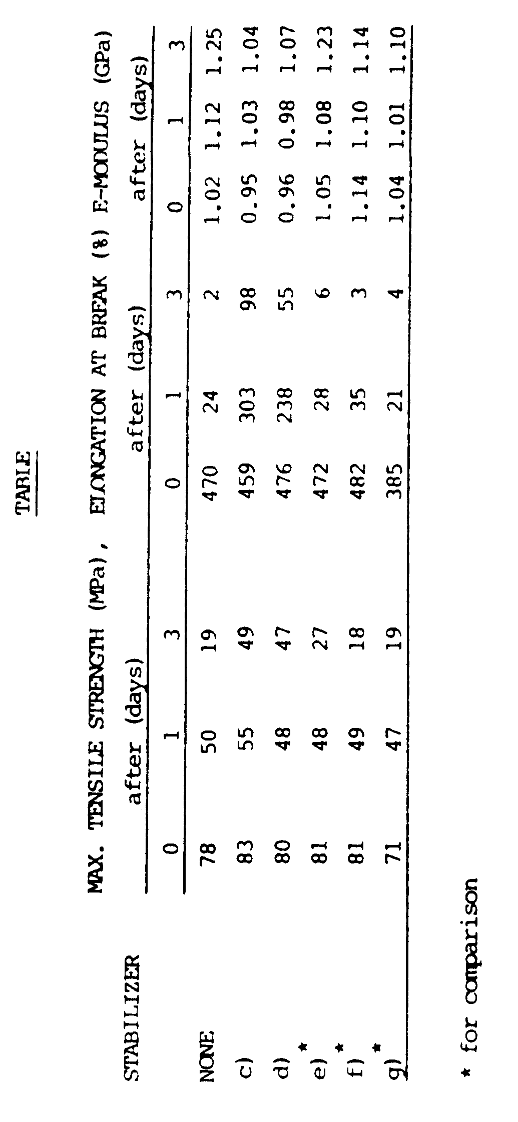

## Claims (Claims for the following Contracting State(s): AT, BE, CH, DE, FR, GB, IT, LI, LU, NL, SE)

1. Copolymer compositions comprising an alternating copolymer of carbon monoxide, an olefinically unsaturated compound and optionally another olefinically unsaturated compound and from 0.03 to 5.0 %w, based on the total composition, of an additive selected from
a) compounds of the general formula 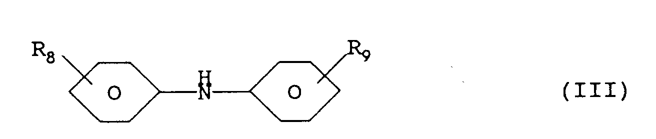 in which
R₈ and R₉, each independently, represent a hydrogen atom, an alkyl group with 1 to 12 carbon atoms, a phenyl group or a benzyl group in which the methylene group may carry one or two substituents selected from alkyl groups with 1 to 8 carbon atoms, and
b) compounds of the general formula 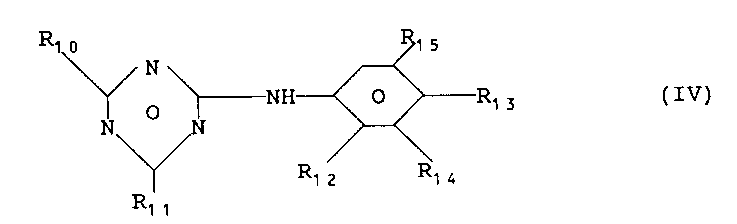 in which
R₁₀ and R₁₁ are, each independently, alkyl or alkylthio groups with 1 to 14 carbon atoms,
R₁₂ is a hydrogen atom or a hydroxyl group,
R₁₃ is a hydroxyl group if R₁₂ is hydrogen or a hydrogen atom or a hydroxyl group if R₁₂ is hydroxyl,
R₁₄ and R₁₅ are hydrogen atoms or alkyl groups with 1 to 16 carbon atoms, provided at least R₁₄ is alkyl if R₁₂ is hydroxyl and at least R₁₄ or R₁₅ is alkyl if R₁₃ is hydroxyl.

2. Composition as claimed in claim 1 wherein R₈ and/or R₉ are alpha, alphadialkylbenzyl.

3. Composition as claimed in claim 1 in which R₈ or R₉ is n-alkyl with 6 to 10 carbon atoms.

4. Composition as claimed in claim 1 wherein R₁₄ is an alkyl group causing steric hindrance.

5. Composition as claimed in claim 1 or 4 in which each of R₁₀ and R₁₁ is an n-alkylthio group with 6 to 10 carbon atoms.

6. Composition as claimed in any one of claims 1 to 5 in which the copolymer is a copolymer of ethylene and carbon monoxide.

7. Composition as claimed in any one of claims 1 to 5 in which the copolymer is a terpolymer of ethylene, propylene and carbon monoxide in which the ratio of ethylene to propylene units is from 3:1 to 15:1.

## Claims (Claims for the following Contracting State(s): ES)

1. Process for the preparation of copolymer compositions comprising blending an alternating copolymer of carbon monoxide, an olefinically unsaturated compound and optionally another olefinically unsaturated compound with from 0.03 to 5.0 %w, based on the total composition, of an additive selected from
a) compounds of the general formula 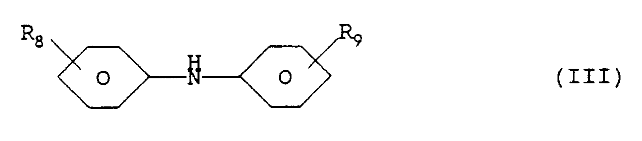 in which
R₈ and R₉, each independently, represent a hydrogen atom, an alkyl group with 1 to 12 carbon atoms, a phenyl group or a benzyl group in which the methylene group may carry one or two substituents selected from alkyl groups with 1 to 8 carbon atoms, and
b) compounds of the general formula 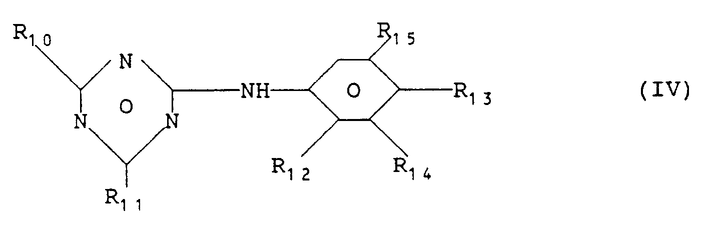 in which
R₁₀ and R₁₁ are, each independently, alkyl or alkylthio groups with 1 to 14 carbon atoms,
R₁₂ is a hydrogen atom or a hydroxyl group,
R₁₃ is a hydroxyl group if R₁₂ is hydrogen or a hydrogen atom or a hydroxyl group if R₁₂ is hydroxyl,
R₁₄ and R₁₅ are hydrogen atoms or alkyl groups with 1 to 16 carbon atoms, provided at least R₁₄ is alkyl if R₁₂ is hydroxyl and at least R₁₄ or R₁₅ is alkyl if R₁₃ is hydroxyl.

2. Process as claimed in claim 1 wherein R₈ and/or R₉ are alpha, alphadialkylbenzyl.

3. Process as claimed in claim 1 in which R₈ or R₉ is n-alkyl with 6 to 10 carbon atoms.

4. Process as claimed in claim 1 wherein R₁₄ is an alkyl group causing steric hindrance.

5. Process as claimed in claim 1 or 4 in which each of R₁₀ and R₁₁ is an n-alkylthio group with 6 to 10 carbon atoms.

6. Process as claimed in any one of claims 1 to 5 in which the copolymer is a copolymer of ethylene and carbon monoxide.

7. Process as claimed in any one of claims 1 to 5 in which the copolymer is a terpolymer of ethylene, propylene and carbon monoxide in which the ratio of ethylene to propylene units is from 3:1 to 15:1.

## Patentansprüche (Patentansprüche für folgende(n) Vertragsstaat(en): AT, BE, CH, DE, FR, GB, IT, LI, LU, NL, SE)

1. Copolymerzusammensetzungen mit einem Gehalt an einem alternierenden Copolymer aus Kohlenmonoxid, einer olefinisch ungesättigten Verbindung und gegebenenfalls einer weiteren olefinisch ungesättigten Verbindung und an 0,03 bis 5,0 Gew.-%, bezogen auf die Gesamtzusammensetzung, eines Additivs, ausgewählt unter
a) Verbindungen mit der allgemeinen Formel 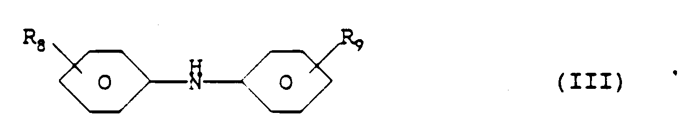 worin R₈ und R₉, jeweils unabhähgig, ein Wasserstoffatom, eine Alkylgruppe mit 1 bis 12 Kohlenstoffatomen, eine Phenylgruppe oder eine Benzylgruppe bedeuten, worin die Methylengruppe einen oder zwei Substituenten, ausgewählt unter Alkylgruppen mit 1 bis 8 Kohlenstoffatomen, tragen kann, und
b) Verbindungen mit der allgemeinen Formel 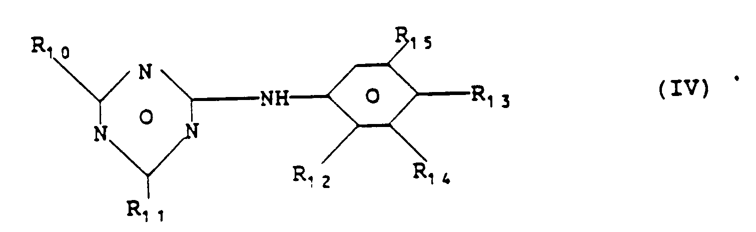 worin R₁₀ und R₁₁, jeweils unabhängig, Alkyl- oder Alkylthio-gruppen mit 1 bis 14 Kohlenstoffatomen darstellen,
R₁₂ ein Wasserstoffatom oder eine Hydroxylgruppe bedeutet,
R₁₃ eine Hydroxylgruppe darstellt, wenn R₁₂ Wasserstoff ist, oder ein Wasserstoffatom oder eine Hydroxylgruppe darstellt, wenn R₁₂ Hydroxyl ist,
R₁₄ und R₁₅ Wasserstoffatome oder Alkylgruppen mit 1 bis 16 Kohlenstoffatomen bedeuten, mit der Maßgabe, daß wenigstens R₁₄ Alkyl ist, wenn R₁₂ Hydroxyl darstellt, und wenigstens R₁₄ oder R₁₅ Alkyl ist, wenn R₁₃ Hydroxyl bedeutet.

2. Zusammensetzung nach Anspruch 1, worin R₈ und/oder R₉ für alpha,alpha-Dialkylbenzyl steht.

3. Zusammensetzung nach Anspruch 1, worin R₈ oder R₉ für n-Alkyl mit 6 bis 10 Kohlenstoffatomen steht.

4. Zusammensetzung nach Anspruch 1, worin R₁₄ eine Alkylgruppe darstellt, die eine sterische Hinderung hervorruft.

5. Zusammensetzung nach Anspruch 1 oder 4, worin jeder der Reste R₁₀ und R₁₁ eine n-Alkylthiogruppe mit 6 bis 10 Kohlenstoffatomen bedeutet.

6. Zusammensetzung nach einem der Ansprüche 1 bis 5, worin das Copolymer ein Copolymer aus Ethylen und Kohlenmonoxid ist.

7. Zusammensetzung nach einem der Ansprüche 1 bis 5,worin das Copolymer ein Terpolymer von Ethylen, Propylen und Kohlenmonoxid ist, worin das Verhältnis der Ethyleneinheiten zu den Propyleneinheiten von 3:1 bis 15:1 beträgt.

## Patentansprüche (Patentansprüche für folgende(n) Vertragsstaat(en): ES)

1. Verfahren zur Herstellung von Copolymerzusammensetzungen, umfassend ein Vermischen eines alternierenden Copolymers aus Kohlenmonoxid, einer olefinisch ungesättigten Verbindung und gegebenenfalls einer weiteren olefinisch ungesättigten Verbindung mit 0.03 bis 5.0 Gew.-%. bezogen auf die Gesamtzusammensetzung, eines Additivs, ausgewählt unter
a) Verbindungen mit der allgemeinen Formel 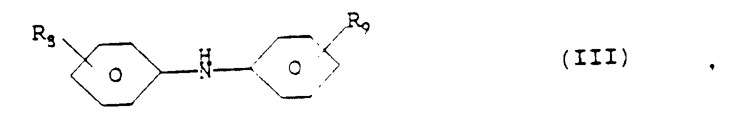 worin R₈ und R₉, jeweils unabhängig, ein Wasserstoffatom, eine Alkylgruppe mit 1 bis 12 Kohlenstoffatomen, eine Phenylgruppe oder eine Benzylgruppe bedeuten, worin die Methylengruppe einen oder zwei Substituenten, ausgewählt unter Alkylgruppen mit 1 bis 8 Kohlenstoffatomen, tragen kann, und
b) Verbindungen mit der allgemeinen Formel 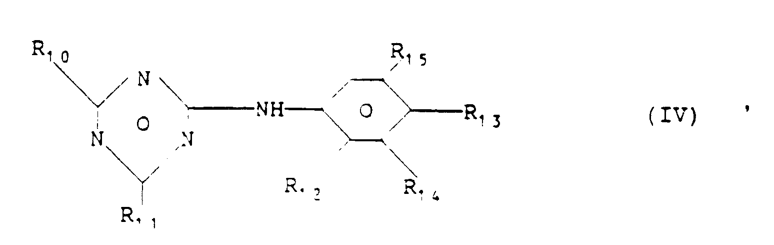 worin R₁₀ und R₁₁, jeweils unabhängig. Alkyl- oder Alkylthiogruppen mit 1 bis 14 Kohlenstoffatomen darstellen,
R₁₂ ein Wasserstoffatom oder eine Hydroxylgruppe bedeutet,
R₁₃ eine Hydroxylgruppe darstellt, wenn R₁₂ Wasserstoff ist, oder ein Wasserstoffatom oder eine Hydroxylgruppe darstellt, wenn R₁₂ Hydroxyl ist.
R₁₄ und R₁₅ Wasserstoffatome oder Alkylgruppen mit 1 bis 16 Kohlenstoffatomen bedeuten, mit der Maßgabe, daß wenigstens
R₁₄ Alkyl ist, wenn R₁₂ Hydroxyl darstellt, und wenigstens R₁₄ oder R₁₅ Alkyl ist, wenn R₁₃ Hydroxyl bedeutet.

2. Verfahren nach Anspruch 1, worin R₈ und/oder R₉ für alpha, alpha-Dialkylbenzyl steht.

3. Verfahren nach Anspruch 1, worin R₈ oder R₉ für n-Alkyl mit 6 bis 10 Kohlenstoffatomen steht.

4. Verfahren nach Anspruch 1, worin R₁₄ eine Alkylgruppe darstellt, die eine sterische Hinderung hervorruft.

5. Verfahren nach Anspruch 1 oder 4, worin jeder der Reste R₁₀ und R₁₁ eine n-Alkylthiogruppe mit 6 bis 10 Kohlenstoffatomen bedeutet.

6. Verfahren nach einem der Ansprüche 1 bis 5, worin das Copolymer ein Copolymer aus Ethylen und Kohlenmonoxid ist.

7. Verfahren nach einem der Ansprüche 1 bis 5,worin das Copolymer ein Terpolymer von Ethylen, Propylen und Kohlenmonoxid ist, worin das Verhältnis der Ethyleneinheiten zu den Propyleneinheiten von 3:1 bis 15:1 beträgt.

## Revendications (Revendications pour l'(les) Etat(s) contractant(s) suivant(s): AT, BE, CH, DE, FR, GB, IT, LI, LU, NL, SE)

1. Compositions copolymère comportant un copolymère alterné de monoxyde de carbone, un composé à insaturation oléfinique, de préférence de l'éthylène et, facultativement, un autre composé à insaturation oléfinique et de 0,03 à 5,0% en poids, sur la base de la composition totale, d'un additif choisi parmi :
a) des composés de la formule générale : 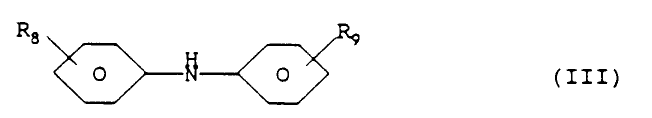 dans laquelle R₈ et R₉ représentent chacun, de façon indépendante, un atome d'hydrogène, un groupe alkyle ayant de 1 à 12 atomes de carbone, un groupe phényle ou un groupe benzyle dans lequel le groupe éthylène peut porter un ou deux substituants choisis parmi les groupes alkyle ayant de 1 à 8 atomes de carbone,
b) des composés de la formule générale 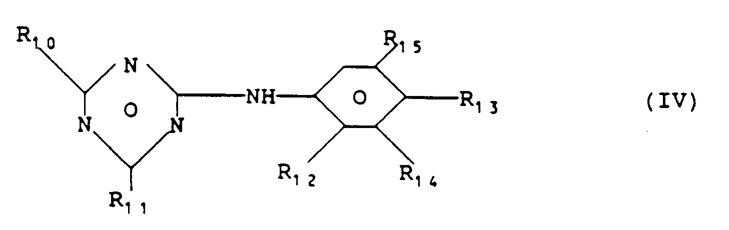 dans laquelle R₁₀ et R₁₁ représentent chacun indépendamment des groupes alkyle ou alkylthio ayant de 1 à 14 atomes de carbone,
R₁₂ est un atome d'hydrogène ou un groupe hydroxyle,
R₁₃ est un groupe hydroxyle si R₁₂ est de l'hydrogène ou un atome d'hydrogène ou bien un groupe hydroxyle si R₁₂ est de l'hydroxyle,
R₁₄ et R₁₅ sont des atomes d'hydrogène ou des groupes alkyle ayant de 1 à 16 atomes de carbone, sous la condition qu'au moins R₁₄ soit de l'alkyle si R₁₂ est un hydroxyle et au moins R₁₄ ou R₁₅ est de l'alkyle si R₁₃ est de l'hydroxyle.

2. Composition telle que revendiquée dans la revendication 1, dans laquelle R₈ et/ou R₉ sont de l' alpha,alpha-dialkylbenzyle.

3. Composition telle que revendiquée dans la revendication 1, dans laquelle R₈ et R₉ est un n-alkyle ayant de 6 à 10 atomes de carbone.

4. Composition telle que revendiquée dans la revendication 1, dans laquelle R₁₄ est un groupe alkyle provoquant un encombrement stérique.

5. Composition telle que revendiquée dans la revendication 1 ou 5, dans laquelle chacun des R₁₀ et R₁₁ est un groupe n-alkylthio ayant de 6 à 10 atomes de carbone.

6. Composition telle que revendiquée dans l'une quelconque des revendications 1 à 5, dans laquelle le copolymère est un copolymère d'éthylène et de monoxyde de carbone.

7. Composition telle que revendiquée dans l'une quelconque des revendications 1 à 5, dans laquelle le copolymère est un terpolymère d'éthylène, de propylène et de monoxyde de carbone dans lequel le rapport entre les motifs éthylène et propylène est de 3:1 à 15:1.

## Revendications (Revendications pour l'(les) Etat(s) contractant(s) suivant(s): ES)

1. Procédé pour la préparation de compositions copolymère, comportant le mélange d'un copolymère alterné de monoxyde de carbone, d'un composé à insaturation oléfinique, de préférence de l'éthylène et, facultativement, d'un autre composé à insaturation oléfinique et de 0,03 à 5,0% en poids, sur la base de la composition totale, d'un additif choisi parmi :
a) des composés de la formule générale : 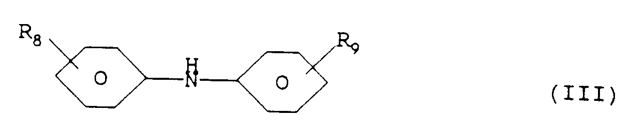 dans laquelle R₈ et R₉ représentent chacun, de façon indépendante, un atome d'hydrogène, un groupe alkyle ayant de 1 à 12 atomes de carbone, un groupe phényle ou un groupe benzyle dans lequel le groupe éthylène peut porter un ou deux substituants choisis parmi les groupes alkyle ayant de 1 à 8 atomes de carbone,
b) des composés de la formule générale 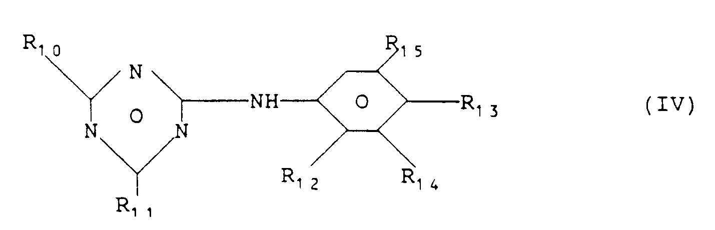 dans laquelle R₁₀ et R₁₁ représentent chacun indépendamment des groupes alkyle ou alkylthio ayant de 1 à 14 atomes de carbone,
R₁₂ est un atome d'hydrogène ou un groupe hydroxyle,
R₁₃ est un groupe hydroxyle si R₁₂ est de l'hydrogène ou un atome d'hydrogène ou bien un groupe hydroxyle si R₁₂ est de l'hydroxyle,
R₁₄ et R₁₅ sont des atomes d'hydrogène ou des groupes alkyle ayant de 1 à 16 atomes de carbone, sous la condition qu'au moins R₁₄ soit de l'alkyle si R₁₂ est un hydroxyle et au moins R₁₄ ou R₁₅ est de l'alkyle si R₁₃ est de l'hydroxyle.

2. Procédé que revendiqué dans la revendication 1, dans lequel R₈ et/ou R₉ sont de l'alpha,alphadialkylbenzyle.

3. Procédé tel que revendiqué dans la revendication 1, dans lequel R₈ et R₉ est un n-alkyle ayant de 6 à 10 atomes de carbone.

4. Procédé tel que revendiqué dans la revendication 1, dans lequel R₁₄ est un groupe alkyle provoquant un encombrement stérique.

5. Procédé tel que revendiqué dans la revendication 1 ou 5, dans lequel chacun des R₁₀ et R₁₁ est un groupe n-alkylthio ayant de 6 à 10 atomes de carbone.

6. Procédé tel que revendiqué dans l'une quelconque des revendications 1 à 5, dans lequel le copolymère est un copolymère d'éthylène et de monoxyde de carbone.

7. Procédé tel que revendiqué dans l'une quelconque des revendications 1 à 5, dans lequel le copolymère est un terpolymère d'éthylène, de propylène et de monoxyde de carbone dans lequel le rapport entre les motifs éthylène et propylène est de 3:1 à 15:1.
